Europäisches Patentamt

European Patent Office

Office européen des brevets

(11) Publication number: **0 373 665 B1**

## EUROPEAN PATENT SPECIFICATION

(45) Date of publication of patent specification: **20.04.94**

(51) Int. Cl.5: **B01D 53/36**, B01J 29/06

(21) Application number: **89123210.0**

(22) Date of filing: **15.12.89**

The file contains technical information submitted after the application was filed and not included in this specification

(54) **Method for exhaust gas cleaning.**

(30) Priority: **16.12.88 JP 316291/88**
**13.12.89 JP 323330/89**

(43) Date of publication of application:
**20.06.90 Bulletin 90/25**

(45) Publication of the grant of the patent:
**20.04.94 Bulletin 94/16**

(84) Designated Contracting States:
**DE FR GB**

(56) References cited:
EP-A- 0 087 906     EP-A- 0 272 136
EP-A- 0 291 704     DE-C- 3 722 081
US-A- 3 276 993     US-A- 3 926 782
US-A- 4 297 328

W.O. Haag, et al. : Faraday Discussion Chemical Society, Vol. 72, p.317 (1981)

Breck, Donald W.: Zeolite molecular sieves:structure, chemistry, and use, p. 384,385. John Wiley & Sons, Inc. (1974)

(73) Proprietor: **Tosoh Corporation**
**4560, Kaisei-cho**
**Shinnanyo-shi, Yamaguchi-ken(JP)**

(72) Inventor: **Inoue, Shunji**
**2554-1, Oaza-Tonda**
**Shinnanyo-shi Yamaguchi-ken(JP)**
Inventor: **Kasahara, Senshi**
**2-8-31, Tonda**
**Shinnanyo-shi Yamaguchi-ken(JP)**
Inventor: **Eshita, Akinori**
**2575, Oaza-Tonda**
**Shinnanyo-shi Yamaguchi-ken(JP)**
Inventor: **Nakano, Masao**
**7-6-12, Nijigaoka**
**Hikari-shi Yamaguchi-ken(JP)**

(74) Representative: **VOSSIUS & PARTNER**
**Postfach 86 07 67**
**D-81634 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention relates to a method for cleaning exhaust gases discharged from internal combustion engines of e.g. automobiles or factory boilers by employing a catalyst having improved heat resistance.

Various methods have recently been investigated for eliminating noxious components from exhaust gases discharged from internal combustion engines of automobiles. A conventional method for eliminating noxious components from the exhaust gases is to bring the gases into contact with a catalyst, for example a catalytic reduction. This method requires a reducing agent such as ammonia, hydrogen or carbon monoxide, and additionally needs a special apparatus for recovering or decomposing the unreacted reducing agent. On the contrary, a catalytic decomposition method allows elimination of noxious components, especially nitrogen oxides, from the exhaust gases without a special reducing agent and only by passing the exhaust gas through a catalyst layer. This method is most desirable in view of the simplicity of the process. The catalyst used in this process is a crystalline aluminosilicate catalyst containing copper and having a $SiO_2/Al_2O_3$ mole ratio ranging from 20 to 100; see JP-A-60-125250.

However, the aforementioned exhaust-gas-cleaning catalyst composed of a crystalline aluminosilicate containing copper ions involves the disadvantage of significant deterioration of the activity at a high operating temperature: namely, remarkable fall of the catalyst activity, after contact with a high-temperature exhaust gas in the case of a crystalline aluminosilicate containing copper ions and having an $SiO_2/Al_2O_3$ mole ratio of from 20 to 100.

A method for cleaning exhaust gases by employing a high-silica zeolite catalyst is described further in US-A-4 297 328

Also in the field of gasoline engines it has been an increasing demand to employ diluted gasoline combustion in order to lower the fuel cost or reduce the exhausted carbon dioxide gas. In this case the exhausted gas contains excessive oxygen for which the above-mentioned conventional "three-way" catalysts cannot be used and no practical method has been established for eliminating noxious components.

It is the object of the present invention to provide a catalyst which does not deteriorate its exhaust-gas-cleaning activity even when brought into contact with an exhaust gas at a high temperature.

It is a further object of the present invention to provide a method for cleaning an exhaust gas which is feasible also for cleaning an exhaust gas at a high temperature.

These objects have been achieved by the present invention.

According to one aspect of the present invention, there is provided a method for cleaning an exhaust gas from internal combustion engines, comprising bringing the exhaust gas into contact with a crystalline aluminosilicate having a crystal size of not less than 0.5 $\mu$m, containing ions of at least one metal of Group Ib and/or Group VIII of the periodic table in an amount that 0.2 to 0.8, preferably 0.5 to 0.7, metal atom per each aluminum atom is present, and having a mole ratio of $SiO_2/Al_2O_3$ of not less than 20.

According to another aspect of the present invention there is provided a crystalline aluminosilicate as defined above.

The crystalline aluminosilicate for the base material of the present invention has essentially a mole ratio of $SiO_2/Al_2O_3$ of not less than 20. With a mole ratio of less than 20, the prevention of deterioration of the activity of exhaust gas, which is object of the present invention, cannot be achieved. The mole ratio is desired to be at least 20 immediately after the crystalline aluminosilicate is synthesized. The method of production thereof is not limited, if the crystal size produced is not less than 0.5 $\mu$m. For example, ZSM-5 or mordenite, which have a crystal size of not less than 0.5 $\mu$m may be used as the base material in the present invention. The crystalline aluminosilicate per se used as the base material of the present invention is almost inactive in cleaning of exhaust gas without further modification.

The crystal size of the crystalline aluminosilicate of the present invention should preferably be at least 0.5 $\mu$m, and more preferably, in the range of from 1 to 50 $\mu$m. In the following, the term "primary particle size" is used for the crystal size, which is usually determined by scanning electron microscopy. A crystalline aluminosilicate having a particle size of less than 0.5 $\mu$m cannot exhibit high activity in cleaning exhaust gas after it is brought into contact with the exhaust gas at an elevated temperature. This is because smaller particles have structure liable to be destroyed when the atomic bonds are broken by thermal vibration of skeleton atoms and exchanged ions.

On the other hand it is desired that the crystalline aluminosilicate has a particle size of not larger than 50 microns because a larger particle size provides less contact surface area of the catalyst to lower the catalytic activity and causes difficulties in the ion-exchange operation.

The catalyst in the present invention should essentially contain ions of at least one metal of Group Ib and /or Group VIII of the periodic table in an amount of 0.2 to 0.8 metal atom per each aluminum atom.

Noxious components in exhaust gases cannot be satisfactorily eliminated if the amount of the metal ions is less than 0.2 metal atom per each aluminum atom. On the other hand, if the amount exceeds 0.8 metal atoms, the effect of the elimination is little for the content of the metal ion, and moreover, the heat resistance of the catalyst is adversely affected. This is because excessive metal ion exchange tends to form weak metal ion bonds and to make the bonds of the zeolite skeleton liable to be broken by thermal vibration.

The aluminum in the crystalline aluminosilicate mentioned above means the one which is neutralized by bonding with a metal of Group Ib or Group VIII, and does not include aluminum cations contained in materials such as alumina sol, alumina or silica-alumina, added as a binder or a diluent in molding the catalyst or a carrier, nor aluminum cations introduced by cation exchange.

In order to adjust the amount of the metal ions of Group Ib and Group VIII of the periodic table to be in the range of from 0.2 to 0.8 metal atoms per each aluminum atom, an ion exchange may be conducted by bringing crystalline aluminosilicate having a primary particle size of not less than 0.5 $\mu$m in contact with an aqueous or non-aqueous solution (e.g., an organic solvent) containing one or more of the above-mentioned metal ions. In such ion exchange, water is the most preferable medium. An organic solvent may be used if it is capable of ionizing the above-mentioned metals. Suitable solvents include alcohols such as methanol, ethanol, and propanol; amides such as dimethylformamide, and diacetamide; ethers such as diethyl ether; and ketones such as dimethyl ketone and methyl ethyl ketone.

The metal ions which may be used include copper, silver, gold, nickel, palladium, platinum, cobalt, rhodium, iridium, iron, ruthenium and osmium. Particularly preferable metals are copper, cobalt, nickel, etc.

The sources of the above-mentioned metal ions include inorganic salts and the organic salts of the metals such as chlorides, bromides, carbonates, sulfates, nitrates, nitrites, sulfides, acetates, formates, benzoates and tartrates. Particularly preferable metal salts are nitrates, acetates, and chlorides.

The ion exchange may be conducted by immersing a crystalline aluminosilicate having a primary particle size of 0.5 micron or more in a solution containing one or more kinds of metal ions of Group Ib or Group VIII, or otherwise by allowing a solution containing one or more of the above-mentioned metal ions to flow down through a contact column packed with the crystalline aluminosilicate. An ammine complex of the above-mentioned metals may be used in the ion exchange.

The concentration of the metal ion in the solution, the amount of the solution, and the contact time are suitably selected to satisfy the condition of incorporating into the crystalline aluminosilicate ions of at least one metal of Group Ib and/or Group VIII of the periodic table in an amount of 0.2 to 0.8 metal atom per each aluminum atom.

The aluminosilicate having been subjected to the ion exchange is washed, and if necessary, calcined at a temperature of from 300 to 700 °C, preferably from 350 to 600 °C.

In the calcination, the aluminosilicate after ion exchange may be calcined as it is, or calcined after it is pelletized with a natural clay such as kaoline, halloysite or montmorillonite, and/or an inorganic compound such as alumina, silica, magnesia, titania, zirconia, hafnia, aluminum phosphate, a binary gel e.g. silica-alumina, silica-zirconia, and silica-magnesia, and a ternary gel of e.g. silica-magnesia-alumina.

For the use of the catalyst of the present invention for eliminating noxious components from an exhaust gas, the catalyst is preferably molded into a form having sufficient area to contact with the exhaust gas and allowing easy flow of the gas, such as in a form of a cylinder, a sphere, a Raschig ring, or a honeycomb, or a monolithic catalyst of coated ceramic honeycomb structure.

The ion exchange may also be conducted after the molding.

An exhaust gas is cleaned by employing the above-described crystalline aluminosilicate. The exhaust gas has only to be brought into contact with the catalyst irrespective of the origin of the gas. The contact temperature is from about 200 to 1000 °C, and the contact time is not specifically limited.

The catalyst employed in the present invention exhibits high activity in cleaning gases exhausted from internal combustion engines of automobiles, and boilers of factories even after treated at an elevated temperature.

The present invention has achieved a high activity of a catalyst for cleaning exhaust gases, even after contact with a high-temperature exhaust gas by use of a crystalline aluminosilicate having a primary particle size of not less than 0.5 $\mu$m, containing ions of at least one metal of Group Ib and Group VIII of the periodic table in an amount of 0.2 to 0.8 metal atom per each aluminum atom, and having a mole ratio of $SiO_2/Al_2O_3$ of not less than 20.

The examples below are intended to illustrate the present invention in more detail without thereby limiting it in any way.

Example 1 (Synthesis of zeolite)

An aqueous sodium silicate solution (containing 515.1 g/l of $SiO_2$, 165.5 g/l of $Na_2O$, and 0.3 g/l of $Al_2O_3$) and an aqueous aluminum sulfate solution containing sulfuric acid (containing 278.6 g/l of $Al_2O_3$, 223.2 g/l of $H_2SO_4$) were fed continuously at a rate of 3.2 l/hr, and 0.8 l/hr, respectively into an overflow type reaction vessel having a net volume of 2 liters under agitation. The reaction temperature was 60 °C, and the pH of the slurry was 7.0. The discharged slurry was separated into solid and liquid by centrifugation, and was washed sufficiently to give a fine particulate homogeneous amorphous compound of aluminosilicate having a composition of 1.73 % by weight of $Na_2O$, 2.31 % by weight of $Al_2O_3$, 62.8 % by weight of $SiO_2$, and 33.2 % by weight of $H_2O$. 1720 g of the homogeneous compound and 5281 g of 1.27 % (by weight) aqueous NaOH solution were charged into a 10-liter autoclave, and treated for crystallization by agitating at 180 °C for 23 hours. The resulting mixture were subjected to solid-liquid separation, water-washing, and drying, to give a zeolite TG45 for a base material of an exhaust gas cleaning catalyst. Chemical analysis thereof gave the composition represented by mole ratio of oxides on an anhydrous base as below:

$0.99Na_2O \cdot Al_2O_3 \cdot 39.8SiO_2$

The interplanar spacings (d-values) derived from the powder X-ray diffraction pattern are shown in Table 1.

The size of the primary particles of the TG45 was approximately 3 microns according to scanning electron microscopy.

Table 1

| Interplanar Spacing (d-value) | Relative Strength |
|---|---|
| 11.1 ± 0.3 | high |
| 10.0 ± 0.3 | high |
| 7.4 ± 0.2 | low |
| 7.1 ± 0.2 | low |
| 6.3 ± 0.2 | low |
| 6.04 ± 0.2 | low |
| 5.56 ± 0.1 | low |
| 5.01 ± 0.1 | low |
| 4.60 ± 0.08 | low |
| 4.25 ± 0.08 | low |
| 3.85 ± 0.07 | very high |
| 3.71 ± 0.05 | high |
| 3.04 ± 0.03 | low |
| 2.99 ± 0.02 | low |
| 2.94 ± 0.02 | low |

Example 2 (Synthesis of zeolite)

An aqueous sodium silicate solution (containing 515.1 g/l of $SiO_2$, 165.5 g/l of $Na_2O$, and 0.3 g/l of $Al_2O_3$) and an aqueous aluminum sulfate solution containing sulfuric acid (containing 165.5 g/l of $Al_2O_3$, 258.7 g/l of $H_2SO_4$) were fed continuously at a rate of 3.2 l/hr, and 0.8 l/hr, respectively into an overflow type reaction vessel having a net volume of 2 liters under agitation. The reaction temperature was 60 °C, and the pH of the slurry was 7.0. The discharged slurry was separated into solid and liquid by centrifugation, and was washed sufficiently to give a fine particulate homogeneous amorphous compound of aluminosilicate having a composition of 0.794 % by weight of $Na_2O$, 1.03 % by weight of $Al_2O_3$, 45.1 % by weight of $SiO_2$, and 53.1 % by weight of $H_2O$. 4570 g of the homogeneous compound, 2445 g of 6.93 % (by weight) aqueous NaOH solution, 1185 g of tetrapropylammonium bromide, and 200 g of sodium fluoride were charged into a 10-liter autoclave, and treated for crystallization by agitating at 160 °C for 72 hours. The resulting mixture were subjected to solid-liquid separation, water-washing, aqueous-ammonium-nitrate-washing, and drying to give a zeolite TG70 for a base material of an exhaust gas cleaning catalyst.

Chemical analysis thereof gave the composition represented by mole ratio of oxides on an anhydrous base as below:

$Al_2O_3 \cdot 44.2SiO_2$

The d-values derived from the powder X-ray diffraction pattern were fundamentally the same as those shown in Table 1.

The size of the primary particles of the TG70 was approximately 20 $\mu$m according to scanning electron microscopy.

Example 3 (Preparation of exhaust-gas-cleaning catalyst)

10 g of TG45 prepared in Example 1 was put into an aqueous 2 mol/l ammonium chloride solution weighed out in an amount corresponding to ammonium molecules of 10 times in number of the aluminum atoms in the zeolite, and was stirred at the liquid temperature of 60 °C for 2 hours. After solid-liquid separation, the solid matter was washed with water sufficiently, and was dried at 100 °C for 10 hours.

The resulting zeolite, and 10 g of the TG70 obtained in Example 2 were respectively treated as below. The zeolite was put into an aqueous 0.1 mol/l copper (II) acetate solution weighed out in an amount corresponding to copper atoms equivalent in number to the aluminum atoms in the zeolite, and was stirred at a room temperature. Immediately, 2.5 % ammonia solution was added thereto to adjust the pH of the slurry to 10.5, and the slurry was stirred at a room temperature for 12 hours. After solid-liquid separation, the solid matter was washed with water sufficiently, and was dried at 100 °C for 10 hours.

The resulting catalysts were employed respectively as Cu-TG45, and Cu-TG70.

Table 2 shows the copper ion exchange rates, the copper contents, and the sodium contents of the exhaust-gas-cleaning catalysts as determined by chemical analysis. The copper ion exchange rate was based on the assumption that the copper is exchanged as bivalent copper.

Example 4 (Preparation of exhaust-gas-cleaning catalyst)

10 g of TG45 prepared in Example 1 was put into an aqueous 2 mol/l ammonium chloride solution weighed out in an amount corresponding to ammonium molecules of 10 times in number of the aluminum atoms in the zeolite, and was stirred at the liquid temperature of 60 °C for 2 hours. After solid-liquid separation, the solid matter was washed with water sufficiently, and was dried at 100 °C for 10 hours.

The resulting zeolite, and 10 g of the TG70 obtained in Example 2 were respectively treated as below. The zeolite was put into an aqueous 0.1 mol/l cobalt nitrate solution weighed out in an amount corresponding to cobalt atoms equivalent in number to the aluminum atoms in the zeolite, and was stirred at a room temperature. Immediately, 2.5 % ammonia solution was added thereto to adjust the pH of the slurry to 10.5, and the slurry was stirred at a room temperature for 12 hours. After solid-liquid separation, the solid matter was washed with water sufficiently, and was dried at 100 °C for 10 hours.

The resulting catalysts were employed respectively as Co-TG45, and Co-TG70.

Table 3 shows the cobalt ion exchange rates, the cobalt contents, and the sodium contents of the exhaust-gas-cleaning catalysts as determined by chemical analysis. The cobalt ion exchange rate was based on the assumption that the cobalt is exchanged as bivalent cobalt.

Comparative Example 1 (Preparation of comparative catalyst 1)

ZSM-5 was synthesized as a comparative catalyst base material MG-1 according to Comparative Example 1 of JP-A-53-149699 (US-A-4,100,090). The chemical analysis thereof gave the composition represented by a mole ratio of oxides on an anhydrous base as below:

$0.65Na_2O \cdot Al_2O_3 \cdot 68.8SiO_2$

The d-value derived from powder X-ray diffraction pattern was fundamentally the same as those shown in Table 1.

The size of the primary particles of the MG-1 was approximately 0.1 $\mu$m according to scanning electron microscopy.

10 g of MG-1 thus prepared was put into 2 mol/l ammonium chloride solution weighed out in an amount corresponding to ammonium molecules of 10 times in number of the aluminum atoms in the zeolite, and

5

was stirred at the liquid temperature of 60 °C for 2 hours. After solid-liquid separation, the solid matter was washed with water sufficiently, and was dried at 100 °C for 10 hours.

The resulting zeolite was put into 0.1 mol/l copper (II) acetate solution weighed out in an amount corresponding to copper atoms equivalent in number to the aluminum atoms in the zeolite, and was stirred at a room temperature. Immediately, 2.5 % ammonia solution was added thereto to adjust the pH of the slurry to 10.5, and the slurry was stirred at a room temperature for 12 hours. After solid-liquid separation, the solid matter was washed with water sufficiently, and was dried at 100 °C for 10 hours to give Comparative catalyst 1.

Table 4 shows the copper ion exchange rates, the copper contents, and the sodium contents of the Comparative catalyst 1 as determined by chemical analysis. The copper ion exchange rate was based on the assumption that the copper is exchanged as bivalent copper.

Comparative example 2 (Preparation of Comparative catalysts 2 and 3)

10 g of TG45 prepared in Example 1 was put into 2 mol/l ammonium chloride solution weighed out in an amount corresponding to ammonium molecules of 10 times in number of the aluminum atoms in the zeolite, and was stirred at the liquid temperature of 60 °C for 2 hours. After solid-liquid separation, the solid matter was washed with water sufficiently, and was dried at 100 °C for 10 hours. The resulting product, and TG70 prepared in Example 2 were employed respectively as Comparative catalysts 2 and 3.

Comparative Example 3 (Preparation of Comparative catalysts 4 and 5)

10 g of TG45 prepared in Example 1 was put into 2 mol/l ammonium chloride solution weighed out in an amount corresponding to ammonium molecules of 10 times in number of the aluminum atoms in the zeolite, and was stirred at the liquid temperature of 60 °C for 2 hours. After solid-liquid separation, the solid matter was washed with water sufficiently, and was dried at 100 °C for 10 hours.

The resulting zeolite, and 10 g of the TG70 obtained in Example 2 were respectively treated as below. The zeolite was put into an aqueous 0.1 mol/l copper (II) acetate solution weighed out in an amount corresponding to copper atoms equivalent in number to the aluminum atoms in the zeolite, and was stirred at a room temperature. Immediately, 2.5 % ammonia solution was added thereto to adjust the pH of the slurry to 10.5, and the slurry was stirred at a room temperature for 12 hours. After solid liquid separation, the solid matter was washed with water sufficiently, and was dried at 100 °C for 10 hours. The copper ion exchange operation described above was conducted three times.

The resulting catalysts were employed respectively as Reference catalysts 4 and 5.

Table 4 shows the copper ion exchange rates, the copper contents, and the sodium contents of the exhaust-gas-cleaning catalysts as determined by chemical analysis. The copper ion exchange rate was based on the assumption that the copper is exchanged as bivalent copper.

6

## Table 2

|  | Cu-TG45 | Cu-TG70 |
|---|---|---|
| Copper Ion Exchange Rate (%) | 101 | 99 |
| Copper Content: $CuO/Al_2O_3$ | 1.01 | 0.99 |
| $Na_2O$ Content (% by weight) | 0.015 | 0.009 |

$$\text{Equivalent relative to gram atom of Al} = \frac{\text{metal content}}{2}$$

## Table 3

|  | Co-TG45 | Co-TG70 |
|---|---|---|
| Cobalt Ion Exchange Rate (%) | 99 | 98 |
| Cobalt Content: $CoO/Al_2O_3$ | 0.99 | 0.99 |
| $Na_2O$ Content (% by weight) | 0.015 | 0.009 |

## Table 4

|  | Comparative Catalyst | | |
|---|---|---|---|
|  | 1 | 4 | 5 |
| Copper Ion Exchange Rate (%) | 105 | 180 | 175 |
| Copper Content: $CuO/Al_2O_3$ | 1.05 | 1.80 | 1.75 |
| $Na_2O$ Content (% by weight) | 0.010 | 0.009 | 0.009 |

Example 5 (Evaluation of heat resistance of the exhaust-gas-cleaning catalysts)

The exhaust-gas-cleaning catalysts prepared in Example 3 and Example 4 were placed in an electric oven. The temperature of the oven was elevated at a rate of 5 °C/min up to 900 °C, which temperature was maintained for 6 hours. The power source was then turned off and the oven was left to cool spontaneously to room temperature. The operation was conducted in a dry air environment. The heat resistance was evaluated on the basis of crystallinity which is represented by the ratio of the peak intensities of the d-value, before and after the heat treatment, of the X-ray diffraction pattern derived from powder X-ray diffraction. The results of the evaluation are shown in Table 5.

Comparative Example 4 (Evaluation of heat resistance of the Comparative catalysts)

The comparative catalysts prepared in Comparative examples 1, 2, and 3 were treated in the same manner as in Example 5, and were evaluated for heat resistance similarly. The results are shown in Table 5.

Table 5

| Catalyst | Heat Resistance (crystallinity: %) |
|---|---|
| Cu-TG45 | 91 |
| Cu-TG70 | 88 |
| Co-TG45 | 89 |
| Co-TG70 | 87 |
| Comparative Catalyst 1 | 54 |
| Comparative Catalyst 2 | 93 |
| Comparative Catalyst 3 | 90 |
| Comparative Catalyst 4 | 19 |
| Comparative Catalyst 5 | 20 |

Example 6 (Heat resistance evaluation 1 according to exhaust-gas-cleaning activity)

0.65 g of the exhaust-gas-cleaning catalysts prepared in Example 3 and Example 4 were respectively packed in atmospheric pressure fixed-bed reaction tube. The catalyst in pretreated under the flow of the reaction gas having the composition below at a gas flow rate of 600 ml/min at 500 °C for 0.5 hour. Then the temperature was elevated at a constant rate to 800 °C. The NO-cleaning rate was measured at each temperature (Reaction 1).

| Reaction gas composition: | |
|---|---|
| NO | 1000 ppm |
| $O_2$ | 4 % |
| CO | 1000 ppm |
| $C_3H_6$ | 500 ppm |
| $H_2O$ | 4 % |
| $N_2$ | balance |

The heat treatment was conducted at 800 °C for 5 hours. Subsequently the temperature was lowered to 200 °C, which temperature was kept for 0.5 hours as pretreatment. Then the temperature was again elevated at a constant rate up to 800 °C. The NO-cleaning rate was measured at each temperature (Reaction 2). The heat-resistance was evaluated by the change of the rate of cleaning the NO, which was considered to be a noxious component, in Reaction 1 and Reaction 2. The evaluation results are shown in Table 6 and Table 7.

The NO cleaning rate is represented by the following formula.

NO cleaning rate (%)
= $(NO_{in} - NO_{out})/NO_{in} \times 100$

where "$NO_{in}$" is a concentration of NO at the inlet of the fixed bed reaction tube, and "$NO_{out}$" is a concentration of NO at the outlet of the fixed bed reaction tube.

Comparative Example 5 (Heat-resistance evaluation 1 according to exhaust-gas-cleaning activity of comparative catalysts)

The comparative catalysts prepared in Comparative Examples 1, 2, and 3 were evaluated for heat-resistance in the same manner as in Example 6. The results are shown in Table 8 and Table 9.

Table 6

| Temperature (°C) | NO Cleaning Rate (%) | | | |
| --- | --- | --- | --- | --- |
| | Cu-TG45 | | Cu-TG70 | |
| | Reaction | | Reaction | |
| | 1 | 2 | 1 | 2 |
| 300 | 31 | 20 | 30 | 20 |
| 350 | 48 | 35 | 49 | 36 |
| 400 | 57 | 48 | 56 | 49 |
| 450 | 56 | 50 | 54 | 52 |
| 500 | 46 | 36 | 46 | 38 |

Table 7

| Temperature (°C) | NO Cleaning Rate (%) | | | |
| --- | --- | --- | --- | --- |
| | Co-TG45 | | Co-TG70 | |
| | Reaction | | Reaction | |
| | 1 | 2 | 1 | 2 |
| 300 | 27 | 15 | 28 | 15 |
| 350 | 46 | 29 | 45 | 27 |
| 400 | 53 | 42 | 52 | 40 |
| 450 | 51 | 44 | 51 | 42 |
| 500 | 40 | 32 | 42 | 33 |

Table 8

| Temperature (°C) | NO Cleaning Rate (%) of Comparative Catalyst | | | | | |
| --- | --- | --- | --- | --- | --- | --- |
| | 1 | | 2 | | 3 | |
| | Reaction | | Reaction | | Reaction | |
| | 1 | 2 | 1 | 2 | 1 | 2 |
| 300 | 30 | 9 | 5 | 5 | 5 | 5 |
| 350 | 48 | 20 | 5 | 5 | 5 | 5 |
| 400 | 56 | 25 | 5 | 5 | 5 | 5 |
| 450 | 53 | 23 | 6 | 6 | 7 | 7 |
| 500 | 45 | 20 | 7 | 6 | 7 | 7 |

Table 9

| Temperature (°C) | NO Cleaning Rate (%) of Comparative Catalyst | | | |
|---|---|---|---|---|
| | 4 | | 5 | |
| | Reaction | | Reaction | |
| | 1 | 2 | 1 | 2 |
| 300 | 56 | 10 | 54 | 12 |
| 350 | 50 | 10 | 49 | 13 |
| 400 | 45 | 9 | 45 | 12 |
| 450 | 35 | 9 | 36 | 11 |
| 500 | 30 | 9 | 31 | 10 |

From Tables 6, 7, 8 and 9, it is understood that the exhaust-gas-cleaning method of the present invention employing the crystalline aluminosilicate for exhaust-gas-cleaning catalyst gives higher exhaust-gas-cleaning activity and improved heat-resistance in comparison with comparative catalysts 1, 2, 3, 4, and 5 even after the exhaust-gas-cleaning catalyst is retained in a reaction gas at 800 °C for 5 hours.

Example 7 (Heat resistance evaluation 2 according to exhaust-gas-cleaning activity)

0.65 g of the exhaust-gas-cleaning catalysts prepared in Example 3 were respectively packed in a normal-pressure fixed-bed reaction tube. The catalyst is pretreated under the flow of the reaction gas having the composition below at a gas flow rate of 600 ml/min at 500 °C for 0.5 hour. Then the temperature was elevated at a constant rate to 800 °C. The NO-cleaning rate was measured at each temperature (Reaction 3).

| Reaction gas composition: | |
|---|---|
| NO | 1000 ppm |
| $O_2$ | 6 % |
| CO | 1000 ppm |
| $C_3H_6$ | 500 ppm |
| $H_2O$ | 4 % |

The heat treatment was conducted at 800 °C for 5 hours. Subsequently the temperature was lowered to 200 °C, which temperature was kept for 0.5 hour as pre-treatment. Then the temperature was again elevated at a constant rate up to 800 °C. The NO cleaning rate was measured at each temperature (Reaction 4). The heat-resistance was evaluated by the change of the rate of cleaning the NO, which was considered to be a noxious component, in Reaction 3 and Reaction 4. The evaluation results are shown in Table 10.

From the above results it is understood that the cleaning ability is high even under the presence of excessive $O_2$.

Table 10

| Temperature (°C) | NO Cleaning Rate (%) | | | |
|---|---|---|---|---|
| | Cu-TG45 | | Cu-TG70 | |
| | Reaction | | Reaction | |
| | 3 | 4 | 3 | 4 |
| 300 | 31 | 16 | 30 | 17 |
| 350 | 50 | 29 | 51 | 29 |
| 400 | 56 | 43 | 55 | 44 |
| 450 | 53 | 39 | 52 | 40 |
| 500 | 45 | 28 | 44 | 29 |

Example 8 (Preparation of exhaust-gas-cleaning catalyst)

10 g of TG45 prepared in Example 1 was put into 2 mol/l ammonium chloride solution weighed out in an amount corresponding to ammonium molecules of 10 times in number of the aluminum atoms in the zeolite, and was stirred at the liquid temperature of 60 °C for 2 hours. After solid-liquid separation, the solid matter was washed with water sufficiently, and was dried at 100 °C for 10 hours.

The resulting zeolite was put into a mixed solution of 0.1 mol/l copper (II) acetate solution weighed out in an amount corresponding to copper atoms equivalent in number to 1/2 of the aluminum atoms in the zeolite and an aqueous 0.1 mol/l nickel acetate solution weighed out in an amount corresponding to nickel atoms equivalent in number to 1/2 of the aluminum atoms in the zeolite, and was stirred at a room temperature. Immediately, 2.5 % ammonia solution was added thereto to adjust the pH of the slurry to 10.5, and the slurry was stirred at a room temperature for 12 hours. After solid-liquid separation, the solid matter was washed with water sufficiently, and was dried at 100 °C for 10 hours.

The resulting catalyst was employed as CuNi-TG45.

Table 11 shows the copper ion exchange rate, the nickel ion exchange rate, and the sodium contents of the exhaust-gas-cleaning catalysts as determined by chemical analysis. The copper and nickel ion exchange rates were based on the assumption that the copper and nickel are exchanged respectively as bivalent copper and bivalent nickel.

Example 9 (Heat resistance evaluation 3 according to exhaust-gas-cleaning activity)

0.65 g of the exhaust-gas-cleaning catalysts prepared in Example 8 was respectively packed in a normal-pressure fixed-bed reaction tube. The catalyst is pretreated under the flow of the reaction gas having the composition below at a gas flow rate of 600 ml/min at 500 °C for 0.5 hour. Then the temperature was elevated at a constant rate up to 800 °C. The NO-cleaning rate was measured at each temperature (Reaction 5).

| Reaction gas composition: | |
|---|---|
| NO | 1000 ppm |
| $O_2$ | 4 % |
| CO | 1000 ppm |
| $C_3H_6$ | 500 ppm |
| $H_2O$ | 4 % |

The heat treatment was conducted at 800 °C for 5 hours. Subsequently the temperature was lowered to 200 °C, which temperature was kept for 0.5 hour as pre-treatment. Then the temperature was again elevated at a constant rate up to 800 °C. The NO-cleaning rate was measured at each temperature (Reaction 6). The heat-resistance was evaluated by the change of the rate of cleaning the NO, which was considered to be a noxious component, in Reaction 5 and Reaction 6. The evaluation results are shown in Table 12.

Table 11

|  | Cu-Ni-TG45 |
|---|---|
| Copper Ion Exchange Rate (%) | 95 |
| Nickel Ion Exchange Rate (%) | 40 |
| $Na_2O$ Content (% by weight) | 0.009 |
| Ion exchange rate = metal content x 100 | |

Table 12

| Temperature (°C) | Reaction | |
|---|---|---|
| | 5 | 6 |
| 300 | 28 | 20 |
| 350 | 45 | 33 |
| 400 | 56 | 48 |
| 450 | 56 | 49 |
| 500 | 48 | 40 |

## Claims

1. A method for cleaning an exhaust gas from internal combustion engines, comprising bringing the exhaust gas into contact with a crystalline aluminosilicate having a crystal size of not less than 0.5 $\mu$m, containing ions of at least one metal of Group Ib of the periodic table in an amount that 0.2 to 0.8 metal atom per each aluminum atom is present and having a mole ratio of $SiO_2/Al_2O_3$ of not less than 20.

2. A method for cleaning an exhaust gas from internal combustion engines comprising bringing the exhaust gas into contact with a crystalline aluminosilicate having a crystal size of not less than 0.5 $\mu$m, containing ions of at least one metal of Group VIII of the periodic table in an amount that 0.2 to 0.8 metal atom per each aluminum atom is present and having a mole ratio of $SiO_2/Al_2O_3$ of not less than 20.

3. A method according to claim 1, wherein the aluminosilicate further contains ions of at least one metal of Group VIII of the periodic table, with a total amount of the metal ions being from 0.2 to 0.8 metal atom per each aluminum atom.

4. A method according to claim 1 in which the metal ions are copper, silver, and/or gold ions.

5. A method according to claim 2, in which the metal ions are nickel, palladium, platinum, cobalt, rhodium, iridium, iron, ruthenium and/or osmium ions.

6. A method according to any of claims 1 and 2, wherein the crystalline alumminosilicate employed has a crystal size in the range of from 1 to 50 $\mu$m.

7. A crystalline aluminosilicate catalyst for exhaust gases having a crystal size of not less than 0.5 $\mu$m, containing ions of at least one metal of Group Ib of the periodic table in an amount that 0.2 to 0.8 metal atom per each aluminum atom is present, and having a mole ratio of $SiO_2/Al_2O_3$ of not less than 20.

8. A crystalline aluminosilicate catalyst for exhaust gases having a crystal size of not less than 0.5 $\mu$m, containing ions of at least one metal of Group VIII of the periodic table in an amount that 0.2 to 0.8 metal atom per each aluminum atom is present, and having a mole ratio of $SiO_2/Al_2O_3$ of not less than 20.

9. A crystalline aluminosilicate catalyst for exhaust gases according to claim 7, which further contains ions of at least one metal of Group VIII of the periodic table, with a total amount of the metal ions being from 0.2 to 0.8 metal atom per each aluminum atom.

**Patentansprüche**

1. Verfahren zur Reinigung eines Abgases aus Verbrennungsmotoren, umfassend das Inkontaktbringen des Abgases mit einem kristallinen Aluminiumsilikat mit einer Kristallgröße von nicht kleiner als 0,5 $\mu$m, das Ionen mindestens eines Metalls der Gruppe Ib des Periodensystems in einer Menge enthält, so daß 0,2 bis 0,8 Metallatome pro Aluminiumatom vorliegen und mit einem $SiO_2/Al_2O_3$-Molverhältnis von nicht weniger als 20.

2. Verfahren zur Reinigung eines Abgases aus Verbrennungsmotoren, umfassend das Inkontaktbringen des Abgases mit einem kristallinen Aluminiumsilikat mit einer Kristallgröße von nicht kleiner als 0,5 $\mu$m, das Ionen mindestens eines Metalls der Gruppe VIII des Periodensystems in einer Menge enthält, so daß 0,2 bis 0,8 Metallatome pro Aluminiumatom vorliegen und mit einem $SiO_2/Al_2O_3$-Molverhältnis von nicht kleiner als 20.

3. Verfahren nach Anspruch 1, wobei das Aluminiumsilikat ferner Ionen mindestens eines Metalls der Gruppe VIII des Periodensystems mit einer Gesamtmenge der Metallionen von 0,2 bis 0,8 Metallatomepro Aluminiumatom enthält.

4. Verfahren nach Anspruch 1, wobei die Metallionen Kupfer, Silber und/oder Goldionen bedeuten.

5. Verfahren nach Anspruch 2, wobei die Metallionen Nickel, Palladium, Platin, Kobalt, Rhodium, Iridium, Eisen, Ruthenium und/oder Osmium-Ionen bedeuten.

6. Verfahren nach einem der Ansprüche 1 oder 2, wobei das angewendete kristalline Aluminiumsilikat eine Kristallgröße im Bereich von 1 bis 50 $\mu$m besitzt.

7. Kristalliner Aluminiumsilikatkatalysator für Abgase, der eine Kristallgröße von nicht kleiner als 0,5 $\mu$m aufweist, enthaltend Ionen mindestens eines Metalls der Gruppe Ib des Periodensystems in einer Menge, so daß 0,2 bis 0,8 Metallatome pro Aluminiumatom vorliegen und mit einem $SiO_2/Al_2O_3$-Molverhältnis von nicht kleiner als 20.

8. Kristalliner Aluminiumsilikatkatalysator für Abgase, der eine Kristallgröße von nicht kleiner als 0,5 $\mu$m aufweist, enthaltend Ionen mindestens eines Metalls der Gruppe VIII des Periodensystems in einer Menge, so daß 0,2 bis 0,8 Metallatome pro Aluminiumatom vorliegen und mit einem $SiO_2/Al_2O_3$-Molverhältnis von nicht kleiner als 20.

9. Kristalliner Aluminiumsilikatkatalysator für Abgase nach Anspruch 7, der ferner Ionen mindestens eines Metalls der Gruppe VIII des Periodensystems mit einer Gesamtmenge der Metallionen von 0,2 bis 0,8 Metallatome pro Aluminiumatom enthält.

**Revendications**

1. Procédé pour purifier le gaz d'échappement des moteurs à combustion interne, comprenant la mise en contact du gaz d'échappement avec un aluminosilicate cristallin ayant une taille des cristaux non inférieure à 0,5 $\mu$m, contenant des ions d'au moins un métal du Groupe Ib du tableau périodique dans une quantité telle que 0,2 à 0,8 atome de métal par atome d'aluminium est présent, et ayant un rapport molaire entre $SiO_2$ et $Al_2O_3$ non inférieur à 20.

2. Procédé pour purifier le gaz d'échappement de moteurs à combustion interne, comprenant la mise en contact du gaz d'échappement avec un aluminosilicate cristallin ayant une taille des cristaux non inférieure à 0,5 $\mu$m, contenant des ions d'au moins un métal du Groupe VIII du tableau périodique dans une quantité telle que 0,2 à 0,8 atome de métal par atome d'aluminium est présent, et ayant un rapport molaire entre $SiO_2$ et $Al_2O_3$ non inférieur à 20.

3. Procédé selon la revendication 1, dans lequel l'aluminosilicate contient en outre des ions d'au moins un métal du Groupe VIII du tableau périodique, avec la quantité totale des ions métal comprise entre 0,2 et 0,8 atome de métal par atome d'aluminium.

4. Procédé selon la revendication 1, dans lequel les ions métal sont des ions cuivre, argent et/ou or.

5. Procédé selon la revendication 2, dans lequel les ions métal sont des ions nickel, palladium, platine, cobalt, rhodium, iridium, fer, ruthénium et/ou osmium.

6. Procédé selon l'une quelconque des revendications 1 et 2, dans lequel l'aluminosilicate cristallin employé a une taille des cristaux dans la gamme comprise entre 1 et 50 $\mu$m.

7. Catalyseur en aluminosilicate cristallin pour gaz d'échappement ayant une taille des cristaux non inférieure à 0,5 $\mu$m, contenant des ions d'au moins un métal du Groupe Ib du tableau périodique dans une quantité telle que 0,2 à 0,8 atome de métal par atome d'aluminium est présent, et ayant un rapport molaire entre $SiO_2$ et $Al_2O_3$ non inférieur à 20.

8. Catalyseur en aluminosilicate cristallin pour gaz d'échappement ayant une taille des cristaux non inférieure à 0,5 $\mu$m, contenant des ions d'au moins un métal du Groupe VIII du tableau périodique dans une quantité telle que 0,2 à 0,8 atome de métal par atome d'aluminium est présent, et ayant un rapport molaire entre $SiO_2$ et $Al_2O_3$ non inférieur à 20.

9. Catalyseur en aluminosilicate cristallin pour gaz d'échappement selon la revendication 7, qui contient en outre des ions d'au moins un métal du Groupe VIII du tableau périodique, avec la quantité totale des ions métal comprise entre 0,2 et 0,8 atome de métal par atome d'aluminium.